(19)

Europäisches Patentamt
European Patent Office
Office européen des brevets

(11) **EP 4 513 289 A1**

(12) **EUROPEAN PATENT APPLICATION**

(43) Date of publication:
26.02.2025 Bulletin 2025/09

(21) Application number: 23193234.4

(22) Date of filing: 24.08.2023

(51) International Patent Classification (IPC):
**G05B 23/02** (2006.01)      **G06F 11/07** (2006.01)
**G06N 5/022** (2023.01)

(52) Cooperative Patent Classification (CPC):
**G05B 23/0278; G06F 40/279; G06F 40/295;**
**G06N 3/045; G06N 3/088; G06N 5/022;**
G05B 23/024

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **MENON, Nisha**
**560100 Bangalore, Karnataka (IN)**
• **KUMAR, Naveen**
**560100 Bangalore, Karnataka (IN)**

(74) Representative: **Horn Kleimann Waitzhofer**
**Schmid-Dreyer**
**Patent- und Rechtsanwälte PartG mbB**
**Theresienhöhe 12**
**80339 München (DE)**

(54) **METHOD AND SYSTEM FOR RESOLVING ANOMALIES IN INDUSTRIAL EQUIPMENT**

(57)     Disclosed is a method (100) and a system (200) to resolve anomalies in industrial equipment. The method (100) involves receiving information about an anomaly and matching it with historical anomalies represented in a knowledge graph (400). This graph includes nodes that represent the historical anomalies in sensor data and historical tickets related to the industrial equipment. The method, then, retrieves historical tickets associated with the matched anomalies from the knowledge graph, parses them to extract information about the encountered problem and employed remedy, and derives a potential remedy based on this extracted information. The method further generates an output, providing the operator of the industrial equipment with the derived potential remedy.

FIG 4

**Description**

The present invention pertains generally to the field of industrial equipment maintenance and anomaly resolution. More particularly, the invention relates to a computer-implemented method and system that utilizes knowledge graphs and machine learning techniques for detecting anomalies in industrial equipment, linking them to past anomalies and associated work order tickets, and generating potential remedies based on historical data.

In various industries, anomalies in industrial equipment often lead to malfunctions or complete shutdowns of the plant. These anomalies may be characterized as sudden changes in sensor behaviours, categorized into step changes or ramp changes. Following an anomaly, an investigation is typically conducted to identify the root causes of the problem, which often trace back to these anomalous behaviours. The resolution of such anomalies is a critical need, and there is a growing demand for a proactive and intelligent approach to anomaly detection and resolution that may help plant operators anticipate and address potential issues before they lead to significant problems.

Traditionally, anomaly detection in industrial settings has been performed using rule-based and machine learning (ML) based techniques. Some methods predict ramp up anomalies ahead of time using time series based algorithms. Furthermore, there are solution recommendation systems built on analysing all historical tickets. Using fuzzy search and text matching principles, these systems may locate the most related tickets and their solutions. However, these approaches often focus on actual shutdowns and breakages, not necessarily on creeping issues that may or may not result in a shutdown.

A major challenge in the current state of anomaly detection and resolution is the lack of an integrated data source. Data silos are quite common, with every source having their own sets of standards and notations. Existing solutions also fail to adequately establish a link between detected anomalies and work order tickets, and thus do not provide a holistic understanding of the problem. As such, these solutions are reactive and often require significant manual intervention, which may lead to delays in resolution and increased costs.

More sophisticated methods for anomaly detection have been developed, including various machine learning models. However, these models often require large volumes of labelled data for training and are sensitive to the quality and representativeness of the training data. Furthermore, such models often operate as black boxes, providing little insight into the underlying causes of detected anomalies or the reasons for their predictions, making it difficult for operators to take informed actions.

The use of knowledge graphs (KGs) in this context is minimal and literature indicates a scarcity of such techniques. A knowledge graph may map the different sets of information and derive a relationship between anomalies and tickets, capturing the individual representation of anomalies to provide an integrated and holistic source of information.

Further, Natural Language Processing (NLP) techniques have been employed to extract information from work order tickets. However, this approach often lacks the ability to segment the problem, cause, and remedy accurately, especially when this information is embedded in unstructured natural language text.

The present invention seeks overcome these challenges by providing a computer-implemented method and system for resolving anomalies in industrial equipment that addresses these limitations. The present invention provides a holistic representation of anomalies and associated work order tickets, facilitate proactive anomaly detection and resolution, and offer interpretability and insights into the underlying causes of anomalies. Moreover, present invention effectively extracts and segments problem, cause, and remedy information from work order tickets, even when this information is embedded in unstructured natural language text.

The object of the present invention is achieved by a computer-implemented method for resolving anomalies in industrial equipment. The method comprises receiving information about an anomaly in the industrial equipment. The method further comprises matching the anomaly with at least one of historical anomalies represented in a knowledge graph, wherein the knowledge graph comprises nodes representing the historical anomalies in sensor data from the industrial equipment and historical tickets related to the industrial equipment, wherein each one of the historical anomalies in the sensor data is associated with corresponding one or more of the historical tickets related to the industrial equipment. The method further comprises retrieving corresponding one or more of the historical tickets related to the industrial equipment associated with the at least one of the historical anomalies matched to the anomaly, from the knowledge graph. The method further comprises parsing the retrieved one or more of the historical tickets related to the industrial equipment to extract information related to a problem encountered with the industrial equipment and a corresponding remedy employed. The method further comprises deriving a potential remedy for the anomaly in the industrial equipment based on the extracted information. The method further comprises generating an output for an operator of the industrial equipment providing the derived potential remedy.

In one or more embodiments, the knowledge graph comprises the historical anomalies in the sensor data and the historical tickets related to the industrial equipment represented as nodes in a Resource Description Framework (RDF) graph, the RDF graph being structured in accordance with an ontology schema defined within a domain of the industrial equipment.

In one or more embodiments, creating nodes for each of the historical anomalies in the sensor data comprises associating anomaly-specific information with each node, the anomaly-specific information comprising one or more of time of occurrence of the historical anomaly, sensor readings at the time of the historical anomaly, operational parameters of the industrial equipment at the time of the historical anomaly, and severity of the historical anomaly.

In one or more embodiments, creating nodes for each of the historical tickets related to the industrial equipment comprises associating ticket-specific information with each node, the ticket-specific information comprising one or more of ticket ID of the historical ticket, time of generation of the historical ticket, problem description in the historical ticket, remedy description in the historical ticket, and operator information in the historical ticket.

In one or more embodiments, the anomaly related to the industrial equipment is detected based on monitoring of the sensor data from the industrial equipment by an autoencoder model trained on normal operational conditions of the industrial equipment, and wherein a deviation in recreation of the sensor data from the industrial equipment by the autoencoder model is detected as the anomaly.

In one or more embodiments, the matching of the anomaly with the at least one of the historical anomalies represented in the knowledge graph comprises utilizing a similarity score derived from a subgraph matching procedure comparing subgraphs associated with the anomaly related to the industrial equipment and the historical anomalies in the knowledge graph, wherein the similarity score indicates a degree of feature similarity between the compared subgraphs.

In one or more embodiments, the parsing of the retrieved one or more of the historical tickets related to the industrial equipment comprises applying a Natural Language Processing (NLP) pipeline to text of the retrieved one or more of the historical tickets to segment the text for identifying the problem encountered with the industrial equipment and the corresponding remedy employed.

In one or more embodiments, the NLP pipeline is configured to execute one or more of stages of text preprocessing, named entity recognition, semantic role labelling, and relation extraction to derive structured information from the text of the retrieved one or more of the historical tickets for segmenting thereof.

In one or more embodiments, the method further comprises applying Pointwise Mutual Information (PMI) score-based algorithm to the segmented text, as output of the NLP pipeline, to classify between problem and remedy in the text of the retrieved one or more of the historical tickets; and applying SHAP (SHapley Additive exPlanations) algorithm to interpret contribution of each word in the classified text towards the identification of the problem encountered with the industrial equipment and the corresponding remedy employed.

In one or more embodiments, the deriving of the potential remedy for the anomaly comprises applying a machine learning algorithm to the extracted information, the machine learning algorithm being trained on a dataset comprising the historical tickets and their associated anomalies, and the machine learning algorithm being configured to predict potential remedies for anomalies based on the historical data.

In one or more embodiments, generating the output for the operator comprises presenting the operator with a list of derived potential remedies ranked based on one or more of historical efficacy of respective one of the derived potential remedies, time taken for implementing respective one of the derived potential remedies, cost involved in implementing respective one of the derived potential remedies and operator feedback for respective one of the derived potential remedies.

In one or more embodiments, the method further comprises updating the knowledge graph dynamically based on one or more of new sensor data from the industrial equipment, detected anomalies, processed work order tickets, and operator feedback.

In one or more embodiments, the method further comprises utilizing a time series forecasting model trained on historical sensor data configured to identify patterns of degradation over time in the sensor data, to detect potential future anomalies in the industrial equipment.

The object of the present invention is also achieved by a system comprising one or more processing units and a memory unit configured to execute the steps of the computer-implemented method according to any one of the preceding method steps.

The object of the present invention is further achieved by a computer program product, having machine-readable instructions stored therein, that when executed by the one or more processing units, cause the processing unit to perform aforementioned method steps.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:

FIG 1 is a flowchart representation of a computer-implemented method for resolving anomalies in industrial equipment, in accordance with one or more embodiments of the present invention;

FIG 2 is a block diagram representation of a system for resolving anomalies in industrial equipment, in accordance with one or more embodiments of the present invention;

FIG 3 is a graph for an exemplary work order ticket, in accordance with one or more embodiments of the present invention;

FIG 4 is an exemplary knowledge graph, in accordance with one or more embodiments of the present invention; and

FIG 5 is a flow-diagram of a workflow as executed, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for resolving anomalies in industrial equipment are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

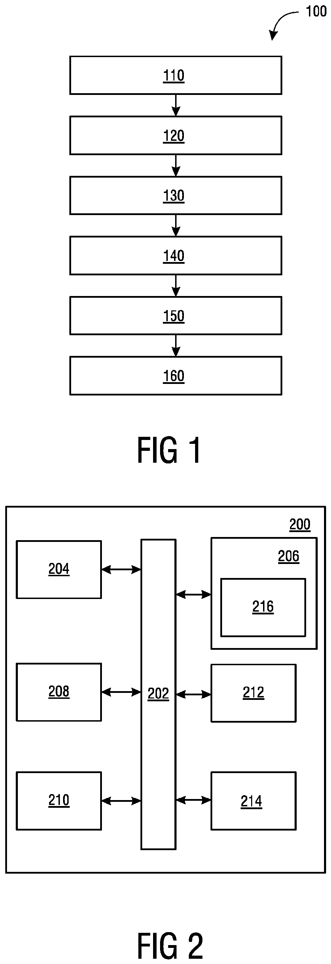

Referring now to FIG 1, illustrated is a flowchart of a method (as represented by reference numeral 100) for resolving anomalies in industrial equipment, in accordance with an embodiment of the present invention. As used herein, the term "industrial equipment" refers to various types of machinery and devices used in an industrial setting, including but not limited to manufacturing plants, power generation facilities, pharmaceutical production units, and other industrial contexts. The industrial equipment may encompass a wide variety of devices, systems, and machinery, such as turbines, roasters, drug manufacturing apparatus, and more, each of which may be equipped with various sensors to monitor their operational status and performance. These sensors generate data that may be used to detect anomalies, predict potential malfunctions, and guide maintenance activities. Further, the term "anomalies" refers to abnormal or unexpected behaviours in the operation of the industrial equipment, often detected through the analysis of sensor data. These anomalies may arise due to sudden changes in sensor behaviour, which may be categorized into step changes or ramp changes. In some cases, an anomaly may indicate a potential malfunction or shutdown of the equipment or the overall plant, thus requiring immediate attention and resolution.

Referring to FIG 2, illustrated is a block diagram of a system 200 for resolving anomalies in industrial equipment, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, or the like. It is to be understood that, when reference is made in the present invention to the term "display" this refers generically either to a display screen on its own or to the screen and an associated housing, drive circuitry and possibly a physical supporting structure, of which all, or part of is provided for displaying information.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for resolving anomalies in industrial equipment. In particular, the memory unit 206 includes a set of modules 216 to perform steps for resolving anomalies in industrial equipment. Also, in the system 200, the memory unit 206 may be configured to store the data associated with or generated by the execution of the inventive steps.

Referring to FIGS 1 and 2 in combination, the various steps of the method 100 as described hereinafter may be executed in the system 200, or specifically in the processing unit 204 of the system 200, for resolving anomalies in industrial equipment. For purposes of the present invention, the present method 100 is embodied as an anomaly resolution algorithm for resolving anomalies in industrial equipment. It may be appreciated that although the method 100 is illustrated and described as a sequence of steps, it may be contemplated that various embodiments of the method 100 may be performed in any order or a combination and need not include all of the illustrated steps.

In embodiments of the present invention, at step 110, the method 100 includes receiving information about an anomaly in the industrial equipment (hereinafter, sometimes, simply referred to as "equipment"). This step 110 involves gathering and processing data that indicates an abnormal or unexpected behaviour in the operation of the industrial equipment. Such information may come from various sources, such as sensors installed on the equipment, and may include data such as temperature readings, pressure levels, operational parameters, and other relevant data points. Herein, the processing unit 204 may receive the information about the anomaly in the industrial equipment through a direct connection to the equipment's sensors, via a network connection, or by accessing a database or other storage system where the information is stored. In present embodiments, the method 100 may include detecting the anomaly in the industrial equipment. That is, rather than receiving the information about the anomaly from some other source, the method 100 may itself involve step to detect the anomaly in the industrial equipment.

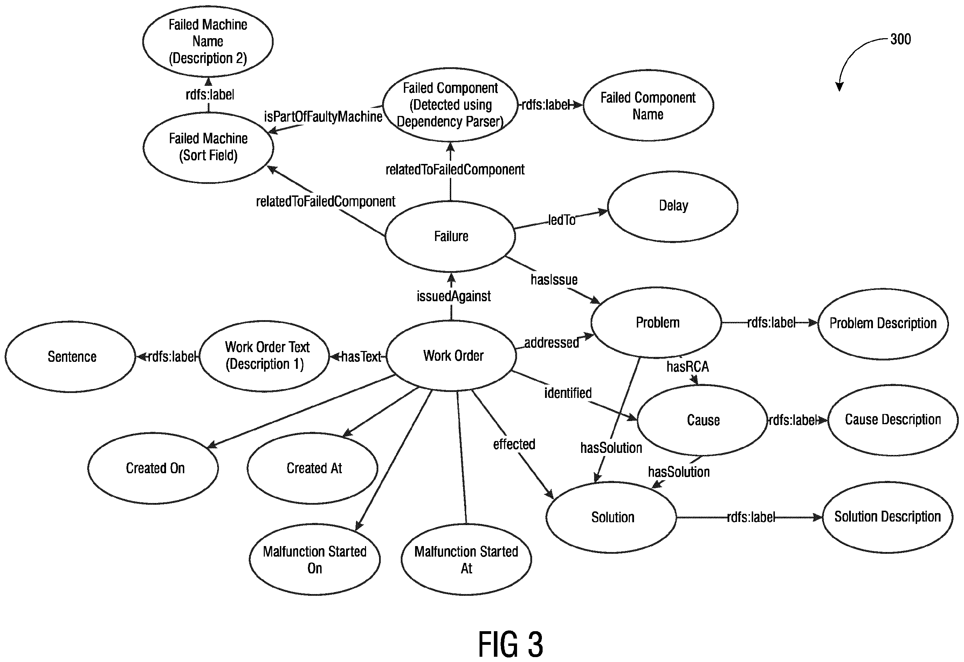

Referring to FIG 3, illustrated is a graph for an exemplary work order ticket (as represented by reference numeral 300), in accordance with one or more embodiments of the present invention. As depicted, the work order ticket 300 represents a comprehensive record of a malfunction that occurred with a particular industrial machine. The work order ticket 300 details the specific problem, the cause of the problem, and the solution that was implemented to address the issue. All these details are interconnected in a graph form, with each aspect of the work order ticket 300 represented as a node. It may be appreciated that the work order itself is represented as a node and includes the text of the work order, providing comprehensive information about the issue, its cause, and the implemented solution. This node also provides temporal information, such as when the work order was created and when the malfunction began.

Further, for example, the node representing the failed machine encompasses critical information such as the name of the machine and additional details about it, such as its function or location. This node is connected to another node that represents the specific component of the machine that failed, which includes its name and the method used to detect the failure, such as a dependency parser used in natural language processing. Further, the problem identified in the work order 300 is represented as a separate node, containing a detailed description of the problem that occurred. The cause of the problem also has its own node, with a description detailing the root cause of the issue. Finally, the solution that was implemented to resolve the problem is represented as a node, encompassing a detailed description of the action taken.

It may be understood that, herein, the schema for metadata of the work order ticket 300 may include problem, remedy, cause, fault, solution, faulty equipment, delay, etc. along with the text for work order ticket (which may be individual sentences). The sentence representation may include linguistic aspects of the text along with one or more of token container, NER container, SRL container, Relation Container, Clause and Dependency Parser container. The integrated source of representation over an ontology schema inherits inferencing and reasoning with graph structure and patterns. The graph in itself has the capability of getting insights from inferencing from the ontology structure with Node Generalization and representation. The integrated source of representation over the ontology schema inherits inferencing and reasoning with graph structure and patterns. Such graph in itself has the capability of getting insights from inferencing from the ontology structure with node Generalization and representation.

Therefore, the graph structure, as utilized in the present invention, provides a comprehensive and structured representation of the work order ticket 300. The graph effectively links the anomaly, which is the failed machine and its specific component, to the problem, cause, and solution as detailed in the work order. This structure allows to retrieve valuable historical information when a new anomaly is detected, facilitating the identification of potential problems and remedies based on past incidents.

In an embodiment, the anomaly related to the industrial equipment is detected based on monitoring of the sensor data from the industrial equipment. Specifically, an autoencoder is trained on sensor data collected under normal operational conditions. This means that the autoencoder learns to accurately encode and decode data patterns that represent normal, expected behaviour of the equipment. Once the autoencoder is trained, it can be used to monitor new sensor data from the industrial equipment. The autoencoder attempts to recreate the incoming sensor data based on its learned model. If the equipment is operating under normal conditions, the autoencoder may be able to accurately reconstruct the sensor data. However, if there is an anomaly, i.e., a deviation from normal operation, this may result in a higher reconstruction error. This deviation in the recreation of sensor data is detected as an anomaly. In other words, if the autoencoder fails to accurately reconstruct the sensor data, this indicates that the current sensor readings represent an abnormal condition or anomaly in the equipment's operation. This approach is beneficial because it does not rely on predefined thresholds or rules, but instead learns from the data itself what constitutes normal operation, making it capable of detecting a wide range of potential anomalies.

As used herein, the autoencoder is a type of artificial neural network used for learning efficient representations of data, typically for the purpose of dimensionality reduction. These networks are unsupervised learning models, meaning they don't require labelled data for training. Instead, they learn to encode the input data into a compressed representation, and then decode this representation back into the original data format. The aim is to minimize the difference between the original input and the reconstructed output, a process known as reconstruction error. Autoencoders consist of two main parts: an encoder and a decoder. The encoder transforms the input data into a different, usually lower-dimensional, representation. The decoder then attempts to reconstruct the original input data from this encoded representation. The network is trained to minimize the difference between the original input and the reconstructed output, effectively forcing the network to learn a compact representation of the input data.

The present method 100 utilizes a knowledge graph that allows for the modelling of complex relationships between different types of entities. The knowledge graph is, typically, a network in which nodes represent entities, and edges represent relationships or associations between those entities. In the present invention, the entities are historical anomalies in sensor data from the industrial equipment and historical tickets related to the industrial equipment. Each node in the knowledge graph represents either an anomaly or a ticket. The anomaly nodes include data about past anomalies detected in the equipment, such as the nature of the anomaly, the time it occurred, the sensor readings at the time, and other relevant operational parameters. The ticket nodes include information from work order tickets that were generated in response to these anomalies, such as the description of the problem, the proposed remedy, and the outcome of the implemented remedy. Further, the edges of the knowledge graph represent the relationships between these anomalies and tickets. Specifically, an edge from an anomaly node to a ticket node indicates that the anomaly was associated with the corresponding ticket. This relationship implies that the anomaly was identified as a problem in the ticket, and a certain remedy was employed to address it.

Thus, herein, the knowledge graph allows for the mapping of complex relationships between anomalies and tickets, capturing a holistic representation of the anomaly's individual characteristics and its associated tickets. In particular, the representation in the knowledge graph allows for understanding the context of anomalies, retrieving related tickets, and generating potential remedies based on historical data. The knowledge graph-based approach enhances the ability to derive meaningful insights from the data and make informed decisions about anomaly resolution. The use of the knowledge graph in this way allows for better understanding of the anomaly at hand, by taking into account not only the anomaly itself but also the historical context in which it has occurred and the action(s) that was taken in response. This enables more effective and informed decision-making when it comes to resolving anomalies.

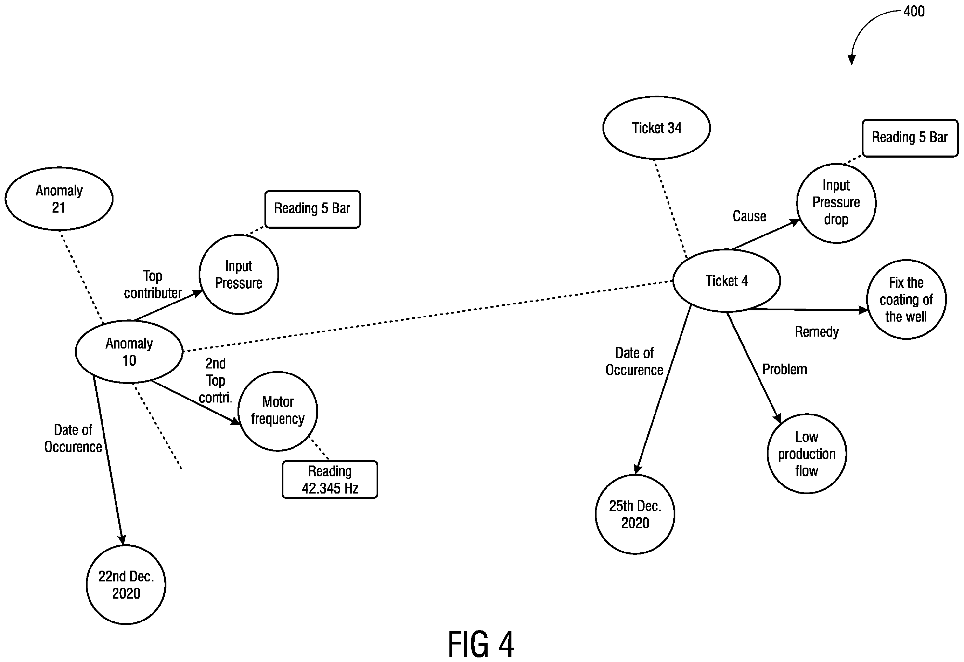

Referring to FIG 4, illustrated is an exemplary knowledge graph (as represented by reference numeral 400), in accordance with one or more embodiments of the present invention. As depicted, the knowledge graph 400 includes multiple nodes and edges. Each node represents an entity, either an anomaly in the sensor data from the industrial equipment or a historical work order ticket related to the industrial equipment. For example, the knowledge graph 400 is shown to include an anomaly node related to "Anomaly 10" and a ticket node related to "Ticket 4". In the knowledge graph 400, these nodes have been visually represented to have elliptical shapes. Each such node may be connected with other nodes providing additional details, such as to provide more context about each node. For example, the anomaly node may be connected to other nodes providing details including the nature of the anomaly, the time it occurred, the sensor readings at the time, and the like, such as, input pressure at the time of anomaly with corresponding reading, motor frequency at the time of anomaly with corresponding reading, date of occurrence of the anomaly with corresponding, and the like (as shown). Similarly, for example, the ticket node may be connected with other nodes providing additional details, such as details about the associated ticket, including the description of the problem and the remedy employed. Such nodes may be represented with different shapes, like circle or rectangle as shown in the knowledge graph 400. Further, as shown, the anomaly node and the ticket node may be connected to other anomaly nodes and ticket nodes, respectively. Edges in the knowledge graph 400 represent the relationships between these entities. Specifically, an edge from an anomaly node to a ticket node indicates that the anomaly was associated with the corresponding ticket. This is visually represented by arrows and lines connecting the relevant nodes.

In an embodiment, the knowledge graph 400 includes the historical anomalies in the sensor data and the historical tickets related to the industrial equipment represented as nodes in a Resource Description Framework (RDF) graph. That is, the knowledge graph 400 is structured as the RDF graph, a widely-used standard for representing data in the web. The RDF graph allows for the modelling of information in the form of subject-predicate-object triples, which is particularly well-suited for representing the complex, interconnected information about historical anomalies and associated tickets. Within the RDF graph, each historical anomaly in the sensor data and each historical ticket related to the industrial equipment is represented as a node. These nodes include the key information about the anomalies and tickets, such as the nature of the anomaly, the time it occurred, the sensor readings at the time, the problem description in the ticket, the remedy description, and other related details. The relationships between these anomalies and tickets are represented as edges in the RDF graph. For instance, an edge may connect an anomaly node to a ticket node, indicating that the anomaly was associated with the corresponding ticket. These edges effectively capture the associations between anomalies and tickets, providing a comprehensive representation of the historical context in which the anomalies occurred and the actions that were taken in response.

The RDF graph is structured in accordance with an ontology schema defined within the domain of the industrial equipment. An ontology is a formal representation of knowledge within a particular domain, often including a vocabulary of terms and some specification of their meaning. This includes definitions of classes, properties, and their interrelationships. In this context, the ontology schema may define the types of nodes (such as anomalies and tickets), the types of relationships (such as associations between anomalies and tickets), and other constraints or rules about the structure of the RDF graph. By leveraging the RDF graph and the ontology schema, the knowledge graph 400 enables to capture, represent, and reason about the complex relationships in the data, for anomaly resolution.

It may be understood that there may be nodes/entities which may be similar from different data sources coming in from work order tickets and anomalies associating top contributor equipment tag. The idea of graph is to generalize the node and relations as much as possible to reduce the feature space dimensions for graph vectorized representation and get better and concrete representation with ontology schema. The present method 100 involves vectorizing pre-trained models to generalize the relations and nodes (or entities) along with domain taxonomy for entities if available. This may enable the process to have similar relation for fault using domain taxonomy, such as semantic general representation. These generalized representation may create associations with work order tickets and anomaly representation over the graph.

In an embodiment, in the knowledge graph 400, creation of nodes for each of the historical anomalies involves associating anomaly-specific information with each node (i.e., each node with specific information relevant to the anomaly). This anomaly-specific information includes critical details that help create a comprehensive representation of each anomaly, for identifying patterns and deriving meaningful insights for future anomaly resolution. The information associated with each anomaly node includes the specific date and time when the anomaly was detected, which may be useful for understanding any temporal patterns or trends in the occurrence of anomalies. Additionally, the sensor readings from the various sensors installed on the industrial equipment at the time of the anomaly are also included. These readings represent diverse operational parameters such as temperature, pressure, vibration levels, among others. The specific operational parameters of the industrial equipment at the time of the anomaly, such as the speed of operation, the load, or the specific task being performed, are also part of the information associated with the anomaly node. Finally, an assessment of the severity of the anomaly is included, which may be determined based on the level of disruption caused to the operation of the machine, potential or actual damage to the machine, or the risk posed to safety. By incorporating all this information, the knowledge graph 400 provides a repository of historical data about anomalies, enabling more accurate matching of new anomalies with historical ones and facilitating more informed decision-making about potential remedies.

In an embodiment, creation of nodes for each of the historical tickets related to the industrial equipment involves integrating ticket-specific information with each node (i.e., each node with specific information relevant to the ticket). This process helps compile a detailed account of each ticket, which assists in extracting valuable insights for handling future anomalies. The ticket-specific information associated with each node incorporates several important aspects. The ticket ID of the historical ticket provides a unique identifier for each ticket, facilitating easy referencing and retrieval. The time of generation of the historical ticket gives a temporal context to when the anomaly was noted and addressed, which can be useful in observing trends or patterns over time. In addition, the problem description in the historical ticket provides a detailed account of the issue encountered with the industrial equipment, offering critical insights into the nature of the anomaly. The remedy description in the historical ticket, on the other hand, outlines the steps taken to mitigate the problem, which may be invaluable when looking for solutions to similar issues in the future. Further, operator information in the historical ticket may include details such as who reported the anomaly, who handled it, and any comments or observations they made. By associating each ticket node with these specific details, the knowledge graph 400 becomes a comprehensive repository of historical data about the handling of anomalies. This helps to match new anomalies with historical tickets more accurately, understand the specifics and context of past anomalies, and make more informed decisions about potential remedies.

At step 120, the method 100 includes matching the anomaly with at least one of historical anomalies represented in a knowledge graph, such as the knowledge graph 300. That is, the detected anomaly in the industrial equipment is compared or matched with historical anomalies represented in the knowledge graph. This matching process aims to find similar patterns or conditions in the past that may help in understanding and resolving the current anomaly. As discussed, the knowledge graph includes nodes representing historical anomalies and their associated work order tickets. Each node encapsulates various details about the anomaly or the ticket, such as the nature of the anomaly, the time of occurrence, sensor readings at the time, problem description in the ticket, remedy description, and other operational parameters. The matching process may involve various techniques such as similarity scoring, subgraph matching, or other machine learning algorithms. The objective is to find historical anomalies in the knowledge graph that share similar features or characteristics with the current anomaly. For instance, the method 100 may involve comparing the sensor readings, operational parameters, or other features associated with the current anomaly to those of the historical anomalies. If a historical anomaly has similar features to the current anomaly, it may be considered a match.

In an embodiment, the matching of the anomaly with the at least one of the historical anomalies represented in the knowledge graph comprises utilizing a similarity score derived from a subgraph matching procedure comparing subgraphs associated with the anomaly related to the industrial equipment and the historical anomalies in the knowledge graph. Herein, the similarity score indicates a degree of feature similarity between the compared subgraphs. Specifically, the similarity score is derived from a subgraph matching procedure that compares subgraphs associated with the current anomaly and the historical anomalies represented in the knowledge graph. It may be understood that the subgraph is a subset of the nodes and edges of a graph. In the present examples, a subgraph may consist of a node representing an anomaly (current or historical), along with the nodes representing the associated tickets and the edges connecting these nodes. Thus, each subgraph includes the details of a particular anomaly and its associated tickets.

The subgraph matching procedure involves comparing the subgraph associated with the current anomaly to the subgraphs associated with the historical anomalies. This comparison may involve various aspects of the subgraphs, such as the number and types of nodes, the number and types of edges, the attributes of the nodes (such as the sensor readings at the time of the anomaly), and the topology of the subgraphs (how the nodes are connected by the edges). The result of the subgraph matching procedure is a similarity score for each historical anomaly. The similarity score quantifies the degree of similarity between the subgraph of the current anomaly and the subgraph of each historical anomaly. A high similarity score indicates a strong similarity between the features of the current anomaly and a historical anomaly, suggesting that they are closely related.

By considering not just the anomalies themselves, but also the associated tickets and the relationships between them, historical anomalies that are most relevant to the current anomaly are identified. In general, the step 120 leverages historical data to gain insights into the potential causes and resolutions of the current anomaly. By finding historical anomalies that are similar to the current one, the system may retrieve associated work order tickets, which can provide valuable information about the potential problems and remedies related to the anomaly.

At step 130, the method 100 includes retrieving corresponding one or more of the historical tickets related to the industrial equipment associated with the at least one of the historical anomalies matched to the anomaly, from the knowledge graph. Herein, the retrieval of these historical tickets is facilitated by the structured representation of the data within the knowledge graph, such as the knowledge graph 400. In particular, after an anomaly in the industrial equipment has been detected and matched to at least one historical anomaly in the knowledge graph, the method 100 then proceeds to retrieve the corresponding historical tickets. These tickets are directly linked to the matched historical anomalies in the knowledge graph, representing past instances when similar anomalies occurred and were documented.

The retrieval process involves traversing the knowledge graph from the nodes representing the matched historical anomalies to the nodes representing the associated tickets. This may be accomplished using graph traversal algorithms, such as depth-first search or breadth-first search, to efficiently navigate the network of nodes and edges in the knowledge graph. The retrieved historical tickets provide valuable information about past instances when similar anomalies occurred. They may include details about the problems that were encountered, the steps taken to address them, the effectiveness of those steps, and other operational parameters at the time of the anomaly. This information may then be used in understanding the current anomaly and deriving potential remedies.

At step 140, the method 100 includes parsing the retrieved one or more of the historical tickets related to the industrial equipment to extract information related to a problem encountered with the industrial equipment and a corresponding remedy employed. This parsing process allows to extract the essential details from the tickets, specifically information related to the problem encountered with the industrial equipment and the remedy that was employed to address it. In particular, parsing, in this context, involves processing the text of the historical tickets to identify and extract the specific pieces of information of interest. The objective of the parsing process is to extract two main pieces of information from each historical ticket: the problem and the remedy. The problem refers to the issue that was encountered with the industrial equipment, as described in the ticket. This may include details about the nature of the anomaly, its effects on the operation of the machine, and any other relevant information. The remedy refers to the action that was taken to address the problem, as recorded in the ticket. This may involve a description of the steps taken, the tools or parts used, the personnel involved, and the outcome of the remedy.

In an embodiment, the parsing of the retrieved one or more of the historical tickets related to the industrial equipment comprises applying a Natural Language Processing (NLP) pipeline to text of the retrieved one or more of the historical tickets to segment the text for identifying the problem encountered with the industrial equipment and the corresponding remedy employed. The application of the NLP pipeline to the text of the historical tickets serves to segment the text into distinct parts, each corresponding to different aspects of the information contained in the tickets. Specifically, the pipeline helps identify segments of the text that describe the problem encountered with the industrial equipment and those that describe the corresponding remedy that was employed. This may involve a variety of NLP techniques, such as tokenization, part-of-speech tagging, named entity recognition, and relation extraction, among others. These techniques help break down the text into manageable units, identify the roles of different words or phrases, and establish relationships between them.

Further, the NLP pipeline is configured to execute one or more of stages of text preprocessing, named entity recognition, semantic role labelling, and relation extraction to derive structured information from the text of the retrieved one or more of the historical tickets for segmenting thereof. That is, the NLP pipeline may include several stages. The initial stages may include text preprocessing tasks such as tokenization, where the text is broken down into individual words or 'tokens'; and normalization, where the text is transformed into a standard form (for instance, by converting all characters to lowercase, or by removing punctuation). Subsequent stages may involve more complex tasks such as part-of-speech tagging, where each word is labelled with its grammatical role in the sentence; named entity recognition, where entities (such as names of machine parts or specific anomalies) are identified; and dependency parsing, where the grammatical relationships between words are established. The final stages of the pipeline may involve text segmentation and information extraction. In these stages, the pre-processed and analysed text is divided into segments, each corresponding to a specific piece of information. For instance, one segment may contain the description of the problem encountered with the industrial equipment, while another segment may contain the description of the remedy employed. The information within these segments is then extracted and stored in a structured format, ready to be used in the subsequent steps of the anomaly resolution process.

In some embodiments, the method 100 further includes applying advanced algorithms to the segmented text output from the NLP pipeline, namely Pointwise Mutual Information (PMI) score-based algorithm and SHAP (SHapley Additive exPlanations) algorithm. The PMI score-based algorithm is applied first. PMI is a statistical measure used in information theory and statistics to quantify the degree of association between two events. In the present invention, the PMI score-based algorithm is used to classify the segments of the text into two categories: problem and remedy. This classification is based on the PMI scores of the words or phrases in the text segments, which reflect their associations with the concepts of 'problem' and 'remedy'. The segments that are most strongly associated with the concept of 'problem' (based on their PMI scores) are classified as describing the problem encountered with the industrial equipment, while those most strongly associated with 'remedy' are classified as describing the corresponding remedy employed. Following the classification of the text segments, the SHAP algorithm is applied. SHAP is a game-theoretic approach to explain the output of any machine learning model. It connects optimal credit allocation with local explanations using the classic Shapley values from cooperative game theory. In the present invention, the SHAP algorithm is used to interpret the contribution of each word in the classified text towards the identification of the problem and the remedy. This involves calculating the SHAP values of the words or phrases in the text, which represent the average contribution of each word to the classification decision across all possible combinations of words.

By applying the PMI score-based algorithm and the SHAP algorithm to the segmented text, the method 100 is able effectively classify the text into problem and remedy segments, and understand the contribution of each word towards this classification. This allows for a more precise and interpretable extraction of information from the historical tickets, aiding in the identification of the problem and the corresponding remedy. This, in turn, supports a more informed and effective approach to resolving current and future anomalies in the industrial equipment.

At step 150, the method 100 includes deriving a potential remedy for the anomaly in the industrial equipment based on the extracted information. This step 150 leverages the insights gleaned from the past to inform the resolution of the current anomaly. The derivation of a potential remedy involves analysing the problem and remedy information extracted from the historical tickets, specifically those tickets associated with historical anomalies that were identified as similar to the current anomaly. This analysis may provide valuable insights into what kind of issues tend to occur under similar conditions and what solutions have been effective in resolving them in the past. Such process may involve various techniques, depending on the complexity of the problem and the available data. For instance, it may involve a simple lookup of the most common remedies associated with similar problems. Alternatively, it may involve more sophisticated techniques, such as machine learning algorithms trained on the historical data to predict potential remedies for a given problem.

In an embodiment, the deriving of the potential remedy for the anomaly comprises applying a machine learning algorithm to the extracted information, the machine learning algorithm being trained on a dataset comprising the historical tickets and their associated anomalies, and the machine learning algorithm being configured to predict potential remedies for anomalies based on the historical data. Herein, the machine learning algorithm is configured to predict potential remedies for anomalies based on this historical data. This prediction is based on the patterns and relationships the algorithm has learned during the training process. For instance, if the algorithm has learned that a certain type of anomaly is often successfully resolved with a certain remedy, it may predict that this remedy may be a suitable solution for a current anomaly of the same type. In this way, the machine learning algorithm aids in the resolution of anomalies by suggesting potential remedies based on past experience. This approach leverages the information contained in the historical tickets to inform decision-making, potentially leading to more effective and efficient resolutions of anomalies.

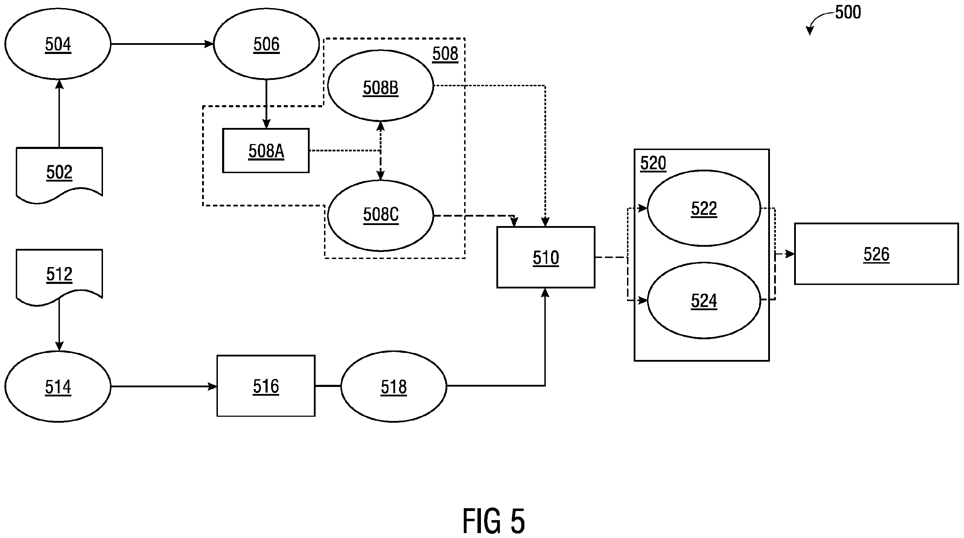

Referring to FIG 5, illustrated is a flow-diagram of a workflow (as represented by reference numeral 500) as executed by the system 200 of the present invention. As depicted, the workflow 500 may concurrently operates on two parallel pipelines, namely a Health Data Workflow and the Work Order Data Workflow. Each pipeline includes a series of steps, represented as blocks in the workflow, with arrows illustrating the movement of data between steps.

Herein, at block 502, the Health Data Workflow begins with the step of acquiring Health Domain Data. This is the initial phase where the system 200 receives information about the operational state of the industrial equipment, which includes various sensor readings and other relevant metrics. This data provides the system with a real-time snapshot of the condition of the equipment, thereby enabling it to detect any anomalies. Then, at block 504, the system 200 proceeds to the task of separating problem and remedy sentences. Using NLP techniques, the system 200 segments the incoming health domain data into discrete sentences. Each sentence is then categorized as either describing a problem or a remedy associated with the operational state of the equipment. Further, in the Health Data Workflow, at block 506, the system 200 processes the separated sentences. The purpose of this step is to simplify and standardize the text, ensuring a consistent format for further analysis. Techniques employed in this step may include tokenization, stemming, and the removal of stop words, among others. The result is a more streamlined and simplified version of the original text that retains key information while excluding extraneous details. After the sentences have been processed, at block 508, the system 200 calculates the Pointwise Mutual Information (PMI) weights. The PMI is a statistical measure that quantifies the association between different words in the text. By calculating PMI weights, the system 200 may identify and highlight words that are particularly significant or informative in the context of the problem and remedy sentences. As depicted in FIG 5, the block 508 involves performing PMI calculation (as represented by block 508A) using Formula (i) (as listed below) using PMI weights and token associated with remedy (as represented by block 508B) and PMI weights and token associated with problem (as represented by block 508C). Further, in the Health Data Workflow, at block 510, the system 200 computes average weighted cosine similarity using Formula (ii) (as listed below). Herein, the system 200 may calculate the cosine similarity between different words or sentences using the PMI weights and tokens derived from the previous steps. The similarity scores are then weighted by the PMI scores, resulting in an average weighted cosine similarity that reflects the overall similarity between the problem and remedy sentences, considering both their lexical similarity and the significance of their constituent words.

$$log\left(\frac{P(token|remedy) + 1}{P(token|problem) + 1}\right) \quad (i)$$

$$\left(\frac{\sum_{\substack{For\ all \\ tokens\ T \\ of\ a\ Type \\ (Problem/\ Remedy)}} cosine\_similarity\ (T, sentence\_token)\ x\ PMIType(T)}{\sum_{\substack{For\ all \\ tokens\ T \\ of\ a\ Type \\ (Problem/\ Remedy)}} PMIType(T)}\right) \quad (ii)$$

Simultaneously, the Work Order Data Workflow starts in the workflow 500. At block 512, this pipeline is initiated with the input of work order data. This data includes historical tickets related to the industrial equipment, offering a source of information about past anomalies and how they were addressed to the system 200. Then at block 514, the system 200 processes the data into a format which can be analysed, similar to the processing step in the Health Data Workflow. The processing of work order data prepares it for further analysis by simplifying and standardizing the text. Once the work order data has been processed, at block 516, the system 200 applies a part-of-speech (POS) tagger and an English lexicon filter to the data. This step involves tagging each word with its grammatical role, and filtering out irrelevant words based on an English lexicon. The outcome is a set of sentence tokens, at block 518, that are ready for comparison with the tokens derived from the Health Data Workflow. Thereby, similar to the Work Order Data Workflow, the Health Data Workflow provides the computation of the average weighted cosine similarity (same as the block 510). This step provides a measure of the overall similarity between the work order data and the health domain data, taking into account the PMI weights. In the present invention, node embeddings and subgraph embeddings are utilized to perform similarity checks on anomalies and tickets.

Upon completion of both the Health Data Workflow and the Work Order Data Workflow, at block 520, the system 200 derives the sum of the average similarity scores for each token in the sentence, both for remedy type tokens (block 522) and problem type tokens (block 524). The outcome of this step is two sums: one representing the overall association of the current operational state with past remedies, and the other representing its association with past problems. Finally, at block 526, the system 200 calculates the final token vote based on the problem score and the remedy score as predefined formula (such as, Final Token Vote = Remedy _Score - Problem_Score). This final token vote provides a measure of whether the current operational state of the equipment is more closely associated with past problems or past remedies, thereby guiding the system 200 in deriving a potential remedy for the current anomaly.

Now, at step 160, the method 100 further includes generating an output for an operator of the industrial equipment providing the derived potential remedy. The objective of the output is to provide the operator with actionable information that can help them address the anomaly. The output may also include additional information, such as the severity of the anomaly, the time of its occurrence, and the history of similar anomalies and their remedies. The derived potential remedy provided in the output is based on the analysis of historical tickets and sensor data, as well as the application of machine learning algorithms. The derived potential remedy may be utilized to provide a starting point for addressing the current anomaly. It represents a solution that, based on historical data, is likely to resolve the issue. However, it may ultimately be up to the operator of the industrial equipment to assess the suggested remedy, consider other relevant factors, and decide on the best course of action.

In an embodiment, generating the output for the operator comprises presenting the operator with a list of derived potential remedies ranked based on one or more of historical efficacy of respective one of the derived potential remedies, time taken for implementing respective one of the derived potential remedies, cost involved in implementing respective one of the derived potential remedies and operator feedback for respective one of the derived potential remedies. That is, the output in the form of the list is not simply a collection of possible solutions; it is a ranked list, where the remedies are ordered based on various factors that reflect their expected effectiveness and feasibility. The factors used to rank the potential remedies include the historical efficacy of each remedy (i.e., its track record in resolving similar anomalies in the past), the time taken for its implementation (especially in industrial contexts where downtime can be costly), the cost involved in its implementation (such as the cost of replacement parts or additional labour), and operator feedback associated with it (i.e., the operator's experiences with implementing the remedy, its ease of use, its impact on the equipment, and any other observations). Each of these factors provides a different perspective on the potential effectiveness and suitability of the remedy. By ranking the potential remedies based on these factors, the method 100 provides the operator with a comprehensive view of the available options. This enables the operator to make an informed decision that considers not only the potential effectiveness of each remedy, but also its practical implications in terms of time, cost, and user experience.

It may be contemplated by a person skilled in the art that the output may be presented in a variety of formats, depending on the nature of the information and the preferences of the operator. For instance, the output may be displayed, using the display as the output device 214 of the system 200, for example, on a dashboard, sent as a notification or an alert, or even delivered as a detailed report.

In some embodiments of the present disclosure, the method 100 further includes updating the knowledge graph (such as, the knowledge graph 400) dynamically based on one or more of new sensor data from the industrial equipment, detected anomalies, processed work order tickets, and operator feedback. That is, the knowledge graph is not a static entity but is designed to be dynamically updated. This dynamic update capability allows to incorporate new information and insights into the knowledge graph as they become available. The sources of this new information may include fresh sensor data from the industrial equipment, newly detected anomalies, recently processed work order tickets, and feedback from the equipment operator. By dynamically updating the knowledge graph based on these sources of new information, the method 100 may continuously learn and improve over time. This allows to adapt to changing conditions, learn from new experiences, and provide increasingly accurate and effective remedies for the anomalies detected in the industrial equipment.

Further, in some embodiments, the method 100 further includes utilizing a time series forecasting model trained on historical sensor data configured to identify patterns of degradation over time in the sensor data, to detect potential future anomalies in the industrial equipment. That is, the time series forecasting model is employed to anticipate potential future anomalies in the industrial equipment. This model is trained on historical sensor data from the equipment, enabling it to identify patterns of degradation over time in the sensor data. For this purpose, the time series forecasting model is used to analyse the sensor data from the industrial equipment, which is collected over time and hence forms a time series. Once the time series forecasting model is trained, it may be used to monitor the current sensor data from the equipment and predict future data points. If the model predicts a pattern of degradation that resembles those associated with past anomalies, it may generate an alert for a potential future anomaly. This allows to detect anomalies not only when they occur, but potentially even before they occur.

In some embodiments, the method 100 may further provide a provision for human intervention, allowing for a collaborative approach between the automated system and human expertise. Once a list of potential remedies for a detected anomaly in the industrial equipment has been generated and presented, the operator has the opportunity to consult with an expert on the problem at hand. The expert, leveraging their knowledge and experience, may then suggest a different solution that they believe may be the best for resolving the detected anomaly. Following the expert consultation, the operator may input this expert-recommended solution into the system 200 (e.g., using the input device 212), thereby integrating human expertise into the machine learning process. Notably, this solution may be tagged as an expert-assisted solution, distinguishing it from the solutions that were originally derived by the system 200. The next time the same anomaly occurs, the system 200 retrieves the expert-assisted solution and presents it as a potential remedy.

The proposed method 100 finds application in a range of industries where predictive and prescriptive maintenance is crucial. In the pharmaceutical industry, for instance, the method 100 may monitor historical anomalies in the strictly regulated drug manufacturing process, preventing quality and legal issues. The method 100 may achieve this by creating an anomaly detection model using carefully chosen process parameters and extracting relevant fields from service tickets. Similarly, in the coffee roasting industry, the method 100 may be used to monitor key parameters for optimal coffee production. The method 100 may identify past anomalies and models them along with work order tickets, tracking coffee characteristics and linking them to known issues and solutions. Furthermore, in turbine plants, the method 100 may analyse borescope inspection and service reports, associating them with anomaly data and other Bill of Materials (BOM) related data. This creates an integrated source of knowledge representation, which aids in resolving open issues from past reports, identifying new issues, and improving inventory management.

The proposed method 100 provides a unique approach to anomaly detection and resolution in industrial equipment. This method 100 leverages Knowledge Graphs (KGs) with linguistic representation integrated with knowledge derived from anomalies, structured in an ontology schema. This allows for sophisticated inferencing and reasoning, which is not common in conventional approaches. A key aspect of the present method 100 is the technical approach of representing data with an integrated and enriched representation over a Resource Description Framework (RDF) graph. This graph combines anomaly data and work order ticket information. The work order ticket, with its natural language text, captures linguistic representation of domain-specific components and attributes, contributing to a richer understanding of the domain. Through this integrated representation, the method 100 allows for the construction and persistence of domain knowledge, which may continually improve with the addition of more data. This leads to an optimal and better mechanism for anomaly resolution, tailored to the specific domain in focus. Moreover, the approach of the proposed method 100 of capturing data in an enriched representation over a graph, encompassing both anomaly data and work order ticket information, opens up new possibilities for enriching the domain with inferencing and reasoning aspects. The resulting system is not just reactive, but can proactively prevent anomalies, leading to improved efficiency and reliability of the industrial equipment.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.


REFERENCE NUMERALS

| | |
|---|---|
| 100 | method |
| 110 | step |
| 120 | step |
| 130 | step |
| 140 | step |
| 150 | step |
| 200 | system |
| 202 | bus |
| 204 | 204 |
| 206 | memory unit |
| 208 | interface |
| 210 | database |
| 212 | input device |
| 214 | output device |
| 216 | set of modules |
| 300 | work order ticket |
| 400 | knowledge graph |
| 500 | workflow |
| 502 | block |
| 504 | block |
| 506 | block |
| 508 | block |
| 508A | block |

508B    block
508C    block
510     block
512     block
514     block
516     block
518     block
520     block
522     block
524     block
526     block

**Claims**

1.  A computer-implemented method (100) for resolving anomalies in industrial equipment, the method (100) comprising:

    receiving information about an anomaly in the industrial equipment;
    matching the anomaly with at least one of historical anomalies represented in a knowledge graph (400), wherein the knowledge graph (400) comprises nodes representing the historical anomalies in sensor data from the industrial equipment and historical tickets related to the industrial equipment, wherein each one of the historical anomalies in the sensor data is associated with corresponding one or more of the historical tickets related to the industrial equipment;
    retrieving corresponding one or more of the historical tickets related to the industrial equipment associated with the at least one of the historical anomalies matched to the anomaly, from the knowledge graph (400);
    parsing the retrieved one or more of the historical tickets related to the industrial equipment to extract information related to a problem encountered with the industrial equipment and a corresponding remedy employed;
    deriving a potential remedy for the anomaly in the industrial equipment based on the extracted information; and
    generating an output for an operator of the industrial equipment providing the derived potential remedy.

2.  The method (100) according to claim 1, wherein the knowledge graph (400) comprises the historical anomalies in the sensor data and the historical tickets related to the industrial equipment represented as nodes in a Resource Description Framework (RDF) graph, the RDF graph being structured in accordance with an ontology schema defined within a domain of the industrial equipment.

3.  The method (100) according to claim 2, wherein creating nodes for each of the historical anomalies in the sensor data comprises associating anomaly-specific information with each node, the anomaly-specific information comprising one or more of time of occurrence of the historical anomaly, sensor readings at the time of the historical anomaly, operational parameters of the industrial equipment at the time of the historical anomaly, and severity of the historical anomaly.

4.  The method (100) according to claim 2 or 3, wherein creating nodes for each of the historical tickets related to the industrial equipment comprises associating ticket-specific information with each node, the ticket-specific information comprising one or more of ticket ID of the historical ticket, time of generation of the historical ticket, problem description in the historical ticket, remedy description in the historical ticket, and operator information in the historical ticket.

5.  The method (100) according to any one of claims 1-4, wherein the anomaly related to the industrial equipment is detected based on monitoring of the sensor data from the industrial equipment by an autoencoder model trained on normal operational conditions of the industrial equipment, and wherein a deviation in recreation of the sensor data from the industrial equipment by the autoencoder model is detected as the anomaly.

6.  The method (100) according to any one of claims 1-5, wherein the matching of the anomaly with the at least one of the historical anomalies represented in the knowledge graph (400) comprises utilizing a similarity score derived from a subgraph matching procedure comparing subgraphs associated with the anomaly related to the industrial equipment and the historical anomalies in the knowledge graph (400), wherein the similarity score indicates a degree of feature similarity between the compared subgraphs.

7.  The method (100) according to any one of claims 1-6, wherein the parsing of the retrieved one or more of the historical tickets related to the industrial equipment comprises applying a Natural Language Processing (NLP) pipeline to text of the retrieved one or more of the historical tickets to segment the text for identifying the problem encountered with the industrial equipment and the corresponding remedy employed.

8. The method (100) according to claim 7, wherein the NLP pipeline is configured to execute one or more of stages of text preprocessing, named entity recognition, semantic role labelling, and relation extraction to derive structured information from the text of the retrieved one or more of the historical tickets for segmenting thereof.

9. The method (100) according to claim 7 or 8, further comprises:
applying Pointwise Mutual Information (PMI) score-based algorithm to the segmented text, as output of the NLP pipeline, to classify between problem and remedy in the text of the retrieved one or more of the historical tickets; and
[0086] applying SHAP (SHapley Additive exPlanations) algorithm to interpret contribution of each word in the classified text towards the identification of the problem encountered with the industrial equipment and the corresponding remedy employed.

10. The method (100) according to any one of claims 1-9, wherein the deriving of the potential remedy for the anomaly comprises applying a machine learning algorithm to the extracted information, the machine learning algorithm being trained on a dataset comprising the historical tickets and their associated anomalies, and the machine learning algorithm being configured to predict potential remedies for anomalies based on the historical data.

11. The method (100) according to any one of claims 1 - 10, wherein generating the output for the operator comprises presenting the operator with a list of derived potential remedies ranked based on one or more of historical efficacy of respective one of the derived potential remedies, time taken for implementing respective one of the derived potential remedies, cost involved in implementing respective one of the derived potential remedies and operator feedback for respective one of the derived potential remedies.

12. The method (100) according to any one of claims 1 - 11, further comprising updating the knowledge graph (400) dynamically based on one or more of new sensor data from the industrial equipment, detected anomalies, processed work order tickets, and operator feedback.

13. The method (100) according to any one of claims 1 - 12, further comprising utilizing a time series forecasting model trained on historical sensor data configured to identify patterns of degradation over time in the sensor data, to detect potential future anomalies in the industrial equipment.

14. A system (200) comprising:

one or more processing units; and
a memory unit communicatively coupled to the one or more processing units, wherein the memory unit comprises an anomaly resolution module stored in the form of machine-readable instructions executable by the one or more processing units, wherein the anomaly resolution module is configured to perform method (100) steps for resolving anomalies in industrial equipment, according to any of the claims 1 to 13.

15. A computer-program product having machine-readable instructions stored therein, which when executed by one or more processing units, cause the one or more processing units to perform a method (100) according to any of the claims 1 to 13.

100

110

120

130

140

150

160

# FIG 1

200

204

206

216

208

202

212

210

214

# FIG 2

300

FIG 3

FIG 4

EP 4 513 289 A1

FIG 5

EP 4 513 289 A1

Europäisches
Patentamt

European
Patent Office

Office européen
des brevets

# EUROPEAN SEARCH REPORT

**Application Number**

**EP 23 19 3234**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/358005 A1 (SAHA AMRITA [SG] ET AL) 10 November 2022 (2022-11-10) <br> * paragraph [0003] * <br> * paragraph [0014] * <br> * paragraph [0016] - paragraph [0017] * <br> * paragraph [0021] * <br> * paragraph [0025] * <br> * paragraph [0029] * <br> * paragraph [0034] * <br> * paragraph [0046] * <br> * paragraph [0048] - paragraph [0049] * <br> * paragraph [0055] * <br> * paragraph [0063] * <br> * paragraph [0079] * <br> * figures 2,11 * | 1-15 | INV. <br> G05B23/02 <br> G06F11/07 <br> G06N5/022 |
| X | US 2017/103329 A1 (REDDY SRINIVASA BYAIAH RAMACHANDRA [IN]) 13 April 2017 (2017-04-13) <br> * paragraphs [0023] - [0063], [0070] - [0083]; figures 2,7-10 * | 1-15 | |

| TECHNICAL FIELDS SEARCHED (IPC) |
|---|
| G05B <br> G06F <br> G06N |

The present search report has been drawn up for all claims

| Place of search | Date of completion of the search | Examiner |
|---|---|---|
| Munich | 18 January 2024 | Barriuso Poy, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 3234

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | Publication date | Patent family member(s) | Publication date |
|---|---|---|---|
| US 2022358005 A1 | 10-11-2022 | NONE | |
| US 2017103329 A1 | 13-04-2017 | NONE | |

EPO FORM P0459

For more details about this annex : see Official Journal of the European Patent Office, No. 12/82